# EUROPEAN PATENT APPLICATION

(11) **EP 2 246 794 A1**
(43) Date of publication of application: **03.11.2010**
(21) Application number: 10160016.1
(22) Date of filing: 15.04.2010
(51) Int. Cl.: G06F 17/30

(54) **Handling and displaying of large file collections**

(30) Priority: 30.04.2009 US 432970
(71) Applicant: Nokia Corporation, 02150 Espoo (FI)
(72) Inventor: Saari, Marko, 02760, Espoo (FI); Schüle, Martin, 33710, Tampere (FI); Helkiö, Vilja, 02100, Espoo (FI); Vartiainen, Juha, 02200, Espoo (FI); Wilke, Jens, 00100, Helsinki (FI)
(74) Representative: Tognetty, Virpi Maria

(57) **Abstract**

An apparatus comprising a controller. The controller is configured to display a file collection, to receive input indicating a sort option, to search said file collection to find files matching said sort option, and to display said files matching said sorting option in response thereto.

## Description

### FIELD

The present application relates to a user interface, an apparatus and a method for improved handling of large file collections, and in particular to a user interface, an apparatus and a method for improved displaying and sorting of large file collections.

### BACKGROUND

Contemporary apparatuses are equipped with large memories. These memories are more and more commonly used to store large file collections of media files such as music, image and video files for example.

These file collections sometimes consist of several thousands of files and it is very difficult for a user to find a specific file unless he knows its exact name. An efficient way of handling these large file collections is thus needed.

Traditionally such files are sorted by name and in folders. This usually generates a folder structure that is most often difficult to overlook.

An apparatus that allows easy and efficient handling of large file collections would thus be useful in modem day society.

### SUMMARY

On this background, it would be advantageous to provide a user interface, an apparatus and a method that overcomes or at least reduces the drawbacks indicated above by providing an apparatus, a method and a computer readable medium according to the claims.

According to a first aspect of the present invention, there is provided an apparatus comprising a controller, wherein said controller is configured to display a file collection, receive input indicating a sort option, search said file collection to find files matching said sort option and to display said files matching said sorting option in response thereto.

According to a second aspect of the present invention, there is provided a computer readable medium comprising at least computer program code for controlling an apparatus, said computer readable medium comprising software code for displaying a file collection, software code for receiving input indicating a sort option, software code for searching said file collection for finding files matching said sort option and software code for displaying said files matching said sorting option in response thereto.

According to third aspect of the present invention, there is provided a method comprising displaying a file collection, receiving input indicating a sort option, searching said file collection for finding files matching said sort option and displaying said files matching said sorting option in response thereto.

By realizing that displaying a group of sorting options close to the title of a folder or subgroup and allowing a user to select sorting options in the vicinity of the sorting option listing displayed, a faster and more easy to use user interface method may be achieved for use in an apparatus, a method, user interface or computer readable medium, which can allow a user to find or sort a sub collection of files more easily and more intuitively.

Further objects, features, advantages and properties of device, method and computer readable medium according to the present application will become apparent from the detailed description.

### BRIEF DESCRIPTION OF THE DRAWINGS

In the following detailed portion of the present description, the teachings of the present application will be explained in more detail with reference to the example embodiments shown in the drawings, in which:

Fig. 1 is an overview of a telecommunications system in which a device according to the present application may be used according to an example embodiment,

Fig. 2a and b are views of each an apparatus according to an example embodiment,

Fig. 3 is a block diagram illustrating the general architecture of an apparatus of Fig. 2 in accordance with the present application,

Fig. 4a to e are screen shot views of an apparatus according to an example embodiment,

Fig. 5 is a flow chart describing a method according to an example embodiment of the application.

### DETAILED DESCRIPTION

In the following detailed description, the user interface, the apparatus, the method and the software product according to the teachings for this application in the form of a cellular/mobile phone will be described by the embodiments. It should be noted that although only a mobile phone is described the teachings of this application can also be used in any electronic device such as in portable electronic devices such as laptops, PDAs, mobile communication terminals, electronic books and notepads and other electronic devices offering access to information.

According to one exemplary embodiment there is provided an apparatus comprising means for displaying a file collection, means for receiving input indicating a sort option, means for searching said file collection for finding files matching said sort option and means for displaying said files matching said sorting option in response thereto.

According to another exemplary embodiment there is provided a user interface for controlling an apparatus comprising a controller configured to display a file collection, receive input indicating a sort option, search said file collection to find files matching said sort option and to display said files matching said sorting option in response thereto.

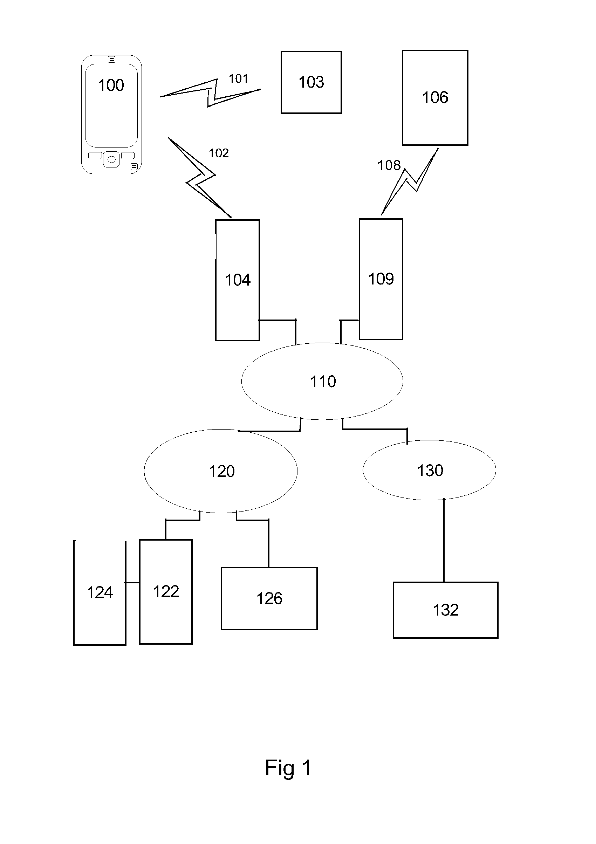

FIG. 1 illustrates an example of a cellular telecommunications system in which the teachings of the present application may be applied. In the telecommunication system of FIG. 1, various telecommunications services such as cellular voice calls, www or Wireless Application Protocol (WAP) browsing, cellular video calls, data calls, facsimile transmissions, music transmissions, still image transmissions, video transmissions, electronic message transmissions and electronic commerce may be performed between a mobile terminal 100 according to the teachings of the present application and other devices, such as another mobile terminal 106 or a stationary telephone 132. It is to be noted that for different embodiments of the mobile terminal 100 and in different situations, different ones of the telecommunications services referred to above may or may not be available; the teachings of the present application are not limited to any particular set of services in this respect.

The mobile terminals 100, 106 are connected to a mobile telecommunications network 110 through Radio Frequency (RF) links 102, 108 via base stations 104, 109. The mobile telecommunications network 110 may be in compliance with any commercially available mobile telecommunications standard, such as Group Speciale Mobile (GSM), Universal Mobile Telecommunications System (UMTS), Digital Advanced Mobile Phone system (D-AMPS), The code division multiple access standards (CDMA and CDMA2000), Freedom Of Mobile Access (FOMA), and Time Division-Synchronous Code Division Multiple Access (TD-SCDMA).

The mobile telecommunications network 110 is operatively connected to a wide area network 120, which may be Internet or a part thereof. An Internet server 122 has a data storage 124 and is connected to the wide area network 120, as is an Internet client computer 126. The server 122 may host a www/wap server capable of serving www/wap content to the mobile terminal 100.

A public switched telephone network (PSTN) 130 is connected to the mobile telecommunications network 110. Various telephone terminals, including the stationary telephone 132, are connected to the PSTN 130.

The mobile terminal 100 is also capable of communicating locally via a local link 101 to one or more local devices 103. The local link can be any type of link with a limited range, such as Bluetooth, a Universal Serial Bus (USB) link, a Wireless Universal Serial Bus (WUSB) link, an IEEE 802.11 wireless local area network link, a Radio Standard link for example an RS-232 serial link, etc. The local devices 103 can for example be various sensors that can communicate measurement values to the mobile terminal 100 over the local link 101.

A computer such as a palmtop can also be connected to the network both via a radio link such as a WiFi link, which is the popular term for a radio frequency connection using the WLAN (Wireless Local Area Network) standard IEEE 802.11.

It should be noted that the teachings of this application are also capable of being utilized in an internet network of which the telecommunications network described above may be a part of.

The internet is a global system of interconnected computer networks that interchange data by packet switching using the standardized Internet Protocol Suite (TCP/IP). It is a "network of networks" that consists of millions of private and public, academic, business, and government networks of local to global scope that are linked by copper wires, fiber-optic cables, wireless connections, and other technologies.

The Internet carries various information resources and services, such as electronic mail, online chat, online gaming, file transfer and file sharing, and the inter-linked hypertext documents and other resources of the World Wide Web (WWW).

It should be noted that even though the teachings herein are described solely to wireless networks it is in no respect to be limited to wireless networks as such, but it to be understood to be usable in the Internet or similar networks. The teachings herein find use in any device having a touch input user interface where other input means, such as keyboards and joysticks, are limited. Examples of such devices are mobile phones, Personal digital Assistants (PDAs), game consoles, media players, personal organizers, electronic dictionaries and digital image viewers.

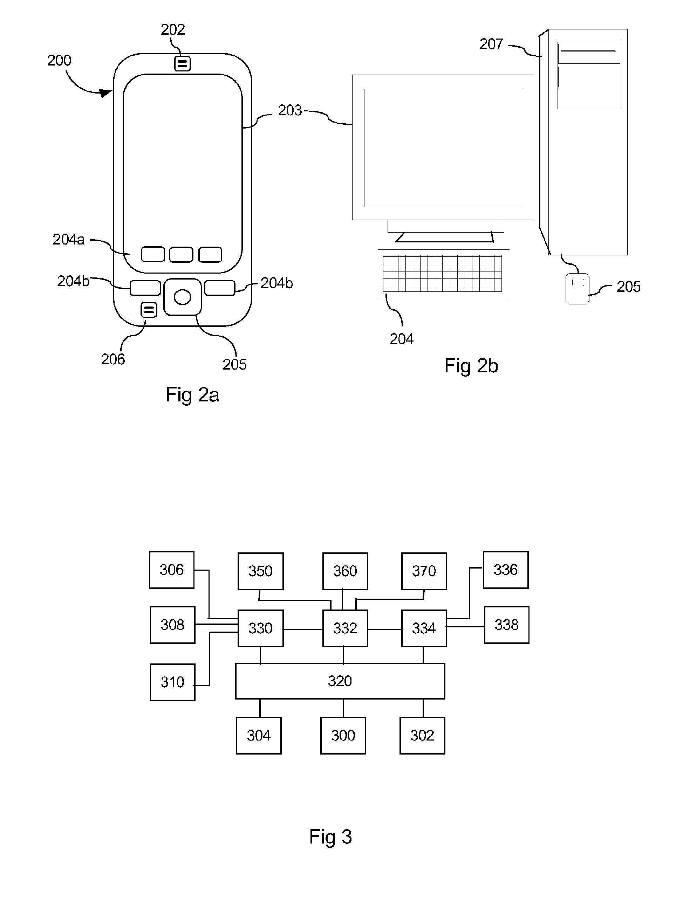

An embodiment 200 of the apparatus in the form of a mobile terminal 100, 200 is illustrated in more detail in FIG. 2a. The mobile terminal 200 comprise a main or first display 203 which in this embodiment is a touch display, a microphone 206, a loudspeaker 202 and a key pad 204 comprising both virtual keys 204a and softkeys or control keys 204b. The apparatus also comprises a navigation input key such as a five-way key 205.

Another embodiment of the apparatus 100 in the form of a computer 200 is illustrated in more detail in FIG. 2b.

The computer 200 has a display 203, a keypad 204 and a cabinet 207 in which a controller and a memory are housed. It should be noted that the cabinet 207 and the display 203 may be incorporated in the same unit. It should also be noted that the keypad 204 may also be integrated in the same unit as either the display 203 and/or the cabinet 207. The computer 200 also has a navigational input means which in this embodiment is a so-called mouse pointer 205. Other navigational input means such as touch pads or touch screens are also possible. It should be noted that the navigational means may be incorporated into the same unit as the keypad 205, the cabinet, 207 and/or the display 203.

The computer 200 can be connected to a network as in figure 1 through either a direct dial-up connection, a Local Area Network connection (LAN) or through an internet connection.

Internet is a global network of interconnected computers, enabling users to share information along multiple channels. Typically, a computer that connects to the Internet can access information from a vast array of available servers and other computers by moving information from them to the computer's local memory. The same connection allows that computer to send information to servers on the network; that information is in turn accessed and potentially modified by a variety of other interconnected computers. A majority of widely accessible information on the Internet consists of inter-linked hypertext documents and other resources of the World Wide Web (WWW). Computer users typically manage sent and received information with web browsers; other software for users' interface with computer networks includes specialized programs for electronic mail, online chat, file transfer and file sharing.

The movement of information in the Internet is achieved via a system of interconnected computer networks that share data by packet switching using the standardized Internet Protocol Suite (TCP/IP). It is a "network of networks" that consists of millions of private and public, academic, business, and government networks of local to global scope that are linked by copper wires, fiber-optic cables, wireless connections, and other technologies.

The internal component, software and protocol structure of the apparatus 200 will now be described with reference to FIG. 3. The apparatus has a controller 300 which is responsible for the overall operation of the mobile terminal and may be implemented by any commercially available CPU ("Central Processing Unit"), DSP ("Digital Signal Processor") or any other electronic programmable logic device. The controller 300 has associated electronic memory 302 such as Random Access Memory (RAM), Read Only Memory (ROM), Electrically Erasable Programmable Read-Only Memory (EEPROM), flash memory, or any combination thereof. The memory 302 is used for various purposes by the controller 300, one of them being for storing data used by and program instructions for various software in the mobile terminal. The software includes a real-time operating system 320, drivers for a man-machine interface (MMI) 334, an application handler 332 as well as various applications. The applications can include a message text editor 350, a notepad application 360, as well as various other applications 370, such as applications for voice calling, video calling, sending and receiving messages such as Short Message Service (SMS), Multimedia Message Service (MMS) or email, web browsing, an instant messaging application, a phone book application, a calendar application, a control panel application, a camera application, one or more video games, etc. It should be noted that two or more of the applications listed above may be executed as the same application.

The MMI 334 also includes one or more hardware controllers, which together with the MMI drivers cooperate with the touch display 336/203, and the keypad 338/204 as well as various other Input/Output devices such as microphone, speaker, vibrator, ringtone generator, LED indicator, etc.

The software also includes various modules, protocol stacks, drivers, etc., which are commonly designated as 330 and which provide communication services (such as transport, network and connectivity) for an RF interface 306, and optionally a Bluetooth interface 308 and/or an IrDA interface 310 for local connectivity. The RF interface 306 comprises an internal or external antenna as well as appropriate radio circuitry for establishing and maintaining a wireless link to a base station (e.g. the link 102 and base station 104 in FIG. 1). The radio circuitry comprises a series of analogue and digital electronic components, together forming a radio receiver and transmitter. These components include, band pass filters, amplifiers, mixers, local oscillators, low pass filters, Analog to Digital and Digital to Analog (AD/DA) converters, etc.

The mobile terminal also has a Subscriber Identity Module (SIM) card 304 and an associated reader. The SIM card 304 comprises a processor as well as local work and data memory.

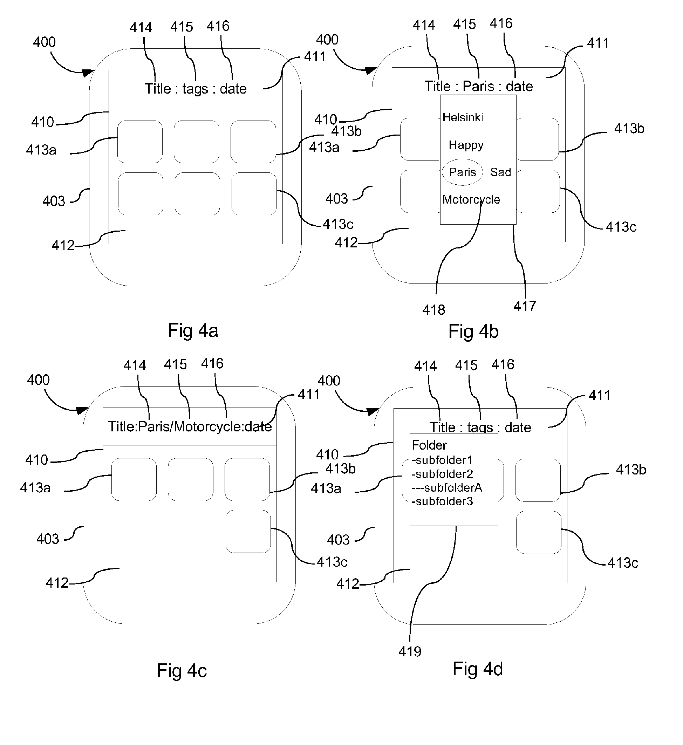

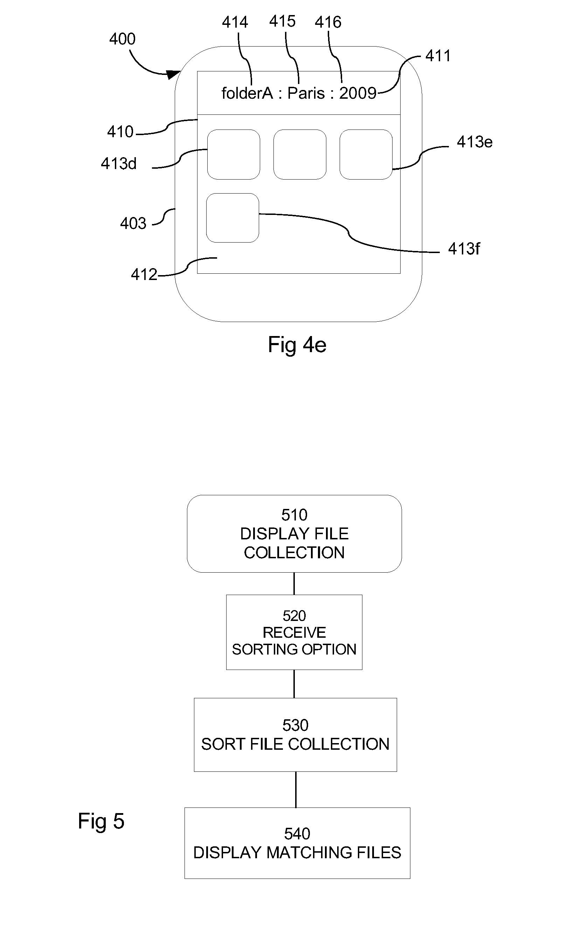

Figure 4 show a screen shot view 403 of an apparatus 400. It should be noted that such an apparatus is not limited to a mobile phone or a computer. In particular such an apparatus 400 is capable of storing a collection of files, such as media files.

In the following description it will be assumed that the display is a touch display and that a tap is performed with a stylus or finger or other touching means tapping on a position on the display. It should be noted that a tap may also be included by use of other pointing means such as a mouse or touch pad controlled cursor which is positioned at a specific position and then a clicking action is performed. In the description it will be assumed that a tap input comprises a clicking action at an indicated position.

Examples of such apparatuses are computers, media players, mobile phones, personal digital assistants (PDA), digital cameras, navigation devices such as GPS (Global Positioning System) devices, game consoles end electronic dictionaries.

The apparatus 400 comprises a touch display 403 on which an application window 410 is displayed. The size of the application window 410 is only an example and different application window sizes may be used as will be clear to a skilled person. The application window 410 has one title area 411 and one display area 412. In the display area 412 a group of files 413a-c are shown. In this example the files are image files and in one embodiment they are shown as thumbnails.

A controller is configured to display the title 414 of the currently viewed folder or collection of files. A controller is also configured to display one or more sorting options 415, 416 next to the title 414.

By realizing that grouping the title of the folder (subgroup) closely together with the sorting options 415, 416 a user will be able to co-relate the sorting options more easily with the folder and to be enticed to use the sorting options thus being able to more easily find a sought for file.

It should be noted that for the purpose of this application sorting is used to refer to the operation of sorting to find items that match the sorting options and to display the found matches.

In this embodiment two sorting options are displayed, a tag 415 and a date 416 option.

A controller is configured to receive a tap input on one of the sorting options and in response thereto display a group of possible or available sorting keys for that option. In one embodiment the currently used sorting keys are marked in the display of the available sorting keys.

Figure 4b shows a screen shot view after a user has tapped on the sort option tag 415. A display area 417 shows a group 417 of available sorting options 418, i.e. tags. In this embodiment the display area partially covers the application window 410. In this embodiment the display area 412 is positioned directly adjacent the sorting option to which it corresponds. This allows a user to both find the options more quickly and to intuitively correlate the option to the sorting function.

In one embodiment the display area covers the display area 412.

In one embodiment the display area covers the application window 410.

A sort option may be selected or de-selected by tapping on it. In this example the tag "Paris" is selected as is indicated by it being encircled. Also other manners of indicating a selection may be used such as highlighting, underlining, sparkling effects etc.

In this example embodiment the label of the sorting option 415 reads "Paris" to indicate to a user which sorting options are currently being used.

Tapping on one of the not already selected sort options or de-selecting a sort option causes a controller to sort the file collection 413 again and display a possibly different subset of files 413a-c.

In one embodiment the sorting is performed as a tag is selected/de-selected.

In one embodiment the sorting is performed as the display area 417 is closed.

In one embodiment the tags are associated with one or more of the following: locations, moods, geographical data, names, events, items, musical genres, album names and contacts.

In one embodiment the tags are one of or a combination of user-defined, preloaded or downloaded from a service provider or other apparatus.

Figure 4c shows a screen shot view 403 of the apparatus 400 as the display area 417 has been closed and the file collection 413 resorted after the additional tag motorcycle has been selected.

The file collection in this example now shows all files related to Paris and motorcycles making it easier for a user to find pictures relating to a motorcycle trip to Paris.

In one embodiment at least one of the labels of the sorting options 414, 415, 416 indicate the currently selected sorting options.

In the example of figs 4b and c the label reads "Paris" in fig 4b and "Paris/motorcycle" in fig 4c. It should be noted that there are a number of variants and possibilities for displaying which tags are currently selected, but that the placement next to the title or close to the title 414 makes it easy for a user to quickly ascertain which tags are selected and how the file collection 413 is currently sorted.

Tapping or otherwise identifying this label will of course provide a possibility to amend or change the sorting option.

In one embodiment the label of the tag sorting option 415 is displayed to read "tag" or "tags" to indicate that tag values may be selected. This is useful should no tag values already have been selected.

In one embodiment the date sorting option 416 is selectable in a manner similar to that of the tag sorting option 414 described above.

A controller is configured to receive input indicating the date sorting option 416 and in response thereto display a date input field.

In one embodiment this date input field is a calendar view where a user may click on a date to enter it.

In one embodiment the controller is configured to receive a selection of individual dates.

In one embodiment the controller is configured to receive a selection of multiple dates.

In one embodiment the controller is configured to receive a selection of a range of dates. In one such embodiment the controller is configured to receive a selection of closed range of dates. In one such embodiment the controller is configured to receive a selection of open range of dates.

In the example embodiment of fig 4e the label of the date sorting option 416 reads "2009" to indicate that the file collection is sorted to only show those files with a date falling within the year 2009.

Tapping or otherwise identifying this label will of course provide a possibility to amend or change the sorting option.

In one embodiment the title is conceived to be a sorting option.

A controller is configured to receive input on the title 414 and in response thereto display a group of alternative subgroups or folders. As a new group or folder is selected it is sorted on the already defined sorting options.

Figure 4d shows a screen shot view 403 of the apparatus 400 as a group of folders 419 is displayed.

Selecting a folder causes the controller to sort the file collection 413 and to display the files 413 in the selected folder that matches the sorting options already defined.

Figure 4e shows a screen shot view 403 of the apparatus 400 as the folder "folderA" has been selected and the file collection 413 has been resorted and displayed accordingly. The sub file collection 413 now displayed is slightly different as is indicated by the changed reference numerals 413d-f. This is a result of that a different subfolder has been sorted.

In the example embodiment of fig 4e the label of the title sorting option 414 reads "folderA" to indicate that the file collection is sorted to only show the files belonging to the folder (or subgroup) "folderA".

Tapping or otherwise identifying this label will of course provide a possibility to amend or change the sorting option.

It should be noted that there may be some overlap between subfolders and subgroups of file collections.

The example shown in fig 4e thus provides a user with an overview of the currently used sorting options (folderA, Paris/Motorcycle and 2009) in a manner that is highly intuitive to understand. A user may also quickly and efficiently edit the sorting options without the need for traversing menu systems. This manner of providing an overview and possibilities to resort is quick to use and learn and requires small movements of input means and less cognitive effort than current day solutions.

In one embodiment the apparatus is a mobile communication terminal such as a mobile phone or a personal digital assistant.

In one embodiment the apparatus is a media player.

In one embodiment (as has been described above) the display is a touch display. Utilizing a touch display as above provides for a highly intuitive and easy to access manner of displaying and selecting sorting options that does not require and large stylus movements and in which all control specific data is presented close together for easy overview and correlation.

This allows a user to quickly and efficiently to browse through a large file collection using a set of sorting options and to adapt the sorting options as is needed or wanted without having to access a complicated menu system and in a manner which entices a user to do so and to utilize the sorting options available.

A user is thus offered the possibility of tagging or identifying a sub collection of files for easier reference.

Figure 5 shows a flowchart of a general method according to the described methods above. In a first step 510 a file collection is displayed. A selection of a sorting option is received in step 520 and the file collection is sorted according to the sorting option in step 530. In step 540 the files matching the sorting option are displayed.

The various aspects of what is described above can be used alone or in various combinations. The teaching of this application may be implemented by a combination of hardware and software, but can also be implemented in hardware or software. The teaching of this application can also be embodied as computer readable code on a computer readable medium. It should be noted that the teaching of this application is not limited to the use in mobile communication terminals such as mobile phones, but can be equally well applied in Personal Digital Assistants (PDAs), game consoles, media players, personal organizers, electronic dictionaries, computers or any other device designed for displaying notifications.

The teaching of the present application may have numerous advantages. Different embodiments or implementations may yield one or more of the following advantages. It should be noted that this is not an exhaustive list and there may be other advantages which are not described herein. For example, one advantage of the teaching of this application may be that a user is offered an easy way of sorting large file collections.

Although the teaching of the present application has been described in detail for purpose of illustration, it is understood that such detail is solely for that purpose, and variations can be made therein by those skilled in the art without departing from the scope of the teaching of this application.

For example, it should be appreciated that the teachings of the present application may also be applied to various types of electronic devices, such as mobile phones, media players, palmtop computers, laptop computers, desktop computers, workstations, mainframe computers, game consoles, digital cameras, electronic dictionaries and so on. It should also be noted that there are many alternative ways of implementing the methods and apparatuses of the teachings of the present application.

Features described in the preceding description may be used in combinations other than the combinations explicitly described.

Whilst endeavouring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

The term "comprising" as used in the claims does not exclude other elements or steps. The term "a" or "an" as used in the claims does not exclude a plurality. A unit or other means may fulfill the functions of several units or means recited in the claims.

## Claims

1. An apparatus comprising a controller, wherein said controller is configured to display a file collection;
receive input indicating a sort option;
search said file collection to find files matching said sort option; and to display said files matching said sorting option in response thereto.

2. An apparatus according to claim 1, wherein said controller is further configured to display an application window comprising a title area and a display area wherein said controller is configured to display a listing of sorting options in the display area adjacent each other and to display said matching files in the display area.

3. An apparatus according to claim 1, wherein said controller is further configured to receive input identifying a sorting option and in response thereto display a group of available sorting options for user selection.

4. An apparatus according to claim 3, wherein said controller is configured to search said file collection to find files matching said sort option and to display said files matching said sorting option in response to receiving a selection of an available sorting option.

5. An apparatus according to claim 2, wherein said controller is configured to display a label for at least one sorting option, which label indicates a currently selected sorting option.

6. An apparatus according to claim 1 comprising a touch display and said input is received through a touch input.

7. An apparatus according to claim 1, the apparatus being a mobile communications terminal.

8. An apparatus according to claim 1, the apparatus being a media player.

9. A computer readable medium comprising at least computer program code for controlling an apparatus, said computer readable medium comprising:
software code for displaying a file collection;
software code for receiving input indicating a sort option;
software code for searching said file collection for finding files matching said sort option;
and
software code for displaying said files matching said sorting option in response thereto.

10. A method comprising:
displaying a file collection;
receiving input indicating a sort option;
searching said file collection for finding files matching said sort option; and
displaying said files matching said sorting option in response thereto.

11. A method according to claim 10 further comprising displaying an application window comprising a title area and a display area and said method further comprising displaying a title and a listing of sorting options in the display area adjacent each other and displaying said matching files in the display area.

12. A method according to claim 10 further comprising receiving input identifying a sorting option and in response thereto displaying a group of available sorting options for user selection.

13. A method according to claim 12 further comprising searching said file collection to find files matching said sort option and displaying said files matching said sorting option in response to receiving a selection of an available sorting option.

14. A method according to claim 11 further comprising displaying a label for at least one sorting option, which label indicates a currently selected sorting option.

15. A method according to claim 10 for use in an apparatus comprising a touch display and said input is received through a touch input.
